# EUROPEAN PATENT SPECIFICATION

(11) **EP 0 699 557 B1**
(45) Date of publication and mention of the grant of the patent: **09.06.1999**
(21) Application number: 95202365.3
(22) Date of filing: 01.09.1995
(51) Int. Cl.: B60P 1/46

(54) **Loading lift device mountable to a vehicle**
An einem Fahrzeug anbringbare Lastenaufzugseinrichtung
Dispositif élévateur de chargement pouvant être monté sur un véhicule

(30) Priority: 02.09.1994 BE 9400786
(43) Date of publication of application: 06.03.1996
(73) Proprietor: NUYTS ORB, 2360 Oud-Turnhout (BE)
(72) Inventor: Nuyts, Henri, B-2360 Oud - Turnhout (BE)
(74) Representative: Lips, Hendrik Jan George, Ir.

(56) References cited:
- EP-A- 0 064 304
- EP-A- 0 373 702
- EP-A- 0 416 701
- DE-A- 3 412 983
- US-A- 3 804 276

## Description

The invention relates to a loading lift device mountable to a vehicle as this is described in the preamble of the main claim and is known from US-A-3 804 276.

Concerning this publication it can be remarked that, as in particular appears from the figures 1 and 3 of it, the tubular part of a hydraulic cilinder is connected to the mast assembly connected to the truck body. Each mast assembly is provided with a guide in which a mast is movable in vertical direction. The open side of said guide faces the other mast guide across the rear opening of the truck body. The pivot points for the loading platform are connected to said masts such that said platform is situated between said masts when brought to the vertical position. If now said known device should be provided with at least one cylinder for operating the loading platform, said cylinder will have to be positioned inside of said masts and so will decrease the width of the free opening of the container of the vehicle. This causes difficulties when loading and unloading large objects.

Now the object of the invention is to carry out the loading lift in such a way, that also when using a hydraulic cylinder for pivoting said loading platform the free opening of the container of the vehicle can be utilized optimally.

According to the invention the features are used as these are indicated in the characterizing portion of the main claim.

It is remarked that according to said claim the upper end of the cylinder is connected to the column or a fixed portion of the container and the lower end to the slider or a portion of the loading platform. By doing this the slider can be moved over a larger distance than in case of the device according to said US patent in which the lower end of the cylinder is fixedly connected to the container or the column.

DE-A-3 412 983 describes the use of hydraulic cylinders for pivoting the loading platform. In this case the sliders to which said cylinders are connected are moved by cables running over various rollers to one hydraulic cylinder near the roof of the container. It will be clear, however, that cables are vulnerable and wear-sensitive parts. Further some guiding rollers and connecting means for the cables will be at such a location that the free opening of the container of the vehicle will be decreased. If instead of cables hydraulic cylinders are used these will decrease the width of the free opening of the container.

With an arrangement of a hoisting cylinder in which it extends parallel to the accompanying column, one could employ a fixed connection of both ends of the hoisting cylinder with the slider and the column, respectively. However, in order to prevent the occurence of bending moments on a hoisting cylinder, or on the parts to which it is connected, it can be provided for, that each hoisting cylinder is pivotably connected to the slider and to the column or a fixed portion of the container.

It is also possible that the part of the slider being outside the column is tubular, in which the hoisting cylinder connected to it is at least partially inside this tube and the pivot connected to the closing cylinder is fixed to the tubular part.

The slider can also comprise a tubular portion being part of the hoisting cylinder.

Then, the hoisting cylinder will substantially extend parallel to the column and the tubular portion can be provided with the pivot for the closing cylinder.

One does need to take into account the fact that the closing cylinder will exert transverse forces on the hoisting cylinder, so that the latter must be dimensioned to be able to accomodate these forces.

In general, the axes of the columns, of the hoisting cylinder and of the closing cylinder, will extend almost parallel to each other in the vertical position of the loading platform. The distance across which the parts will protrude beyond the container will then be as small as possible.

By employing the weight of the various parts, both the hoisting cylinders and the closing cylinders can be single-acting pulling cylinders. They cost less than double-acting cylinders and moreover the number of channels for transport of pressurized medium can be limited.

Here, the hoisting cylinder can be designed in such a way, that the portion of the piston rod protruding outside the cylinder is directed upwards and that the piston rod is provided with a bore through which pressurized medium can be supplied to the space above the piston.

When the hoisting cylinder extends almost parallel to the column, then the connection of the pressurized medium channel to the piston rod will substantially always remain in a fixed position, since it need not follow the movement of the loading lift device.

The invention is further explained by means of an embodiment, shown in the drawing, in which:
Fig. 1 diagrammatically shows a side view of a loading lift device according to the present invention, in its non-operative position;
Fig. 2 diagrammatically shows a plan view of the loading lift device of Fig. 1; and

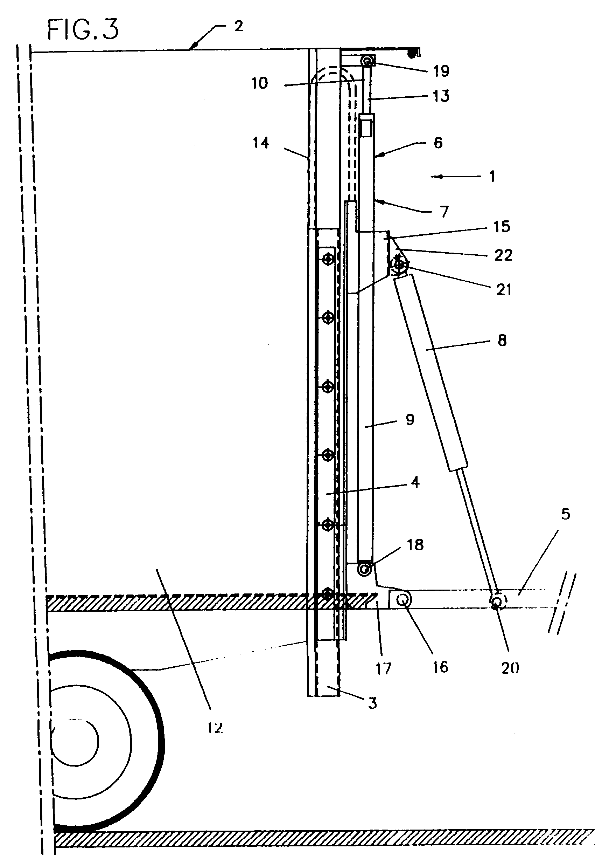

Fig. 3 shows a view corresponding to Fig. 1, but with the loading platform in the operational position.

The loading lift device according to the invention can be mounted to the vehicle 2 and comprises the vertical columns 3, along which sliders 4 are movable. The loading platform 5 is pivotably connected to the sliders 4 by means of the pivot shaft 16. The pivot shaft 16 is in turn connected to the parts 17 projecting from the sliders 4.

The part 17 is also connected to the hoisting mechanism 6 which is formed by the hoisting cylinder 7 comprising the cilinder jacket 9 and the piston rod 10, both being pivotably mounted to the part 17 in the pivot 18 and the column 3 in the pivot 19, respectively. Obviously, the pivot 19 can also be connected to a fixed point of the container 12 of the vehicle 2.

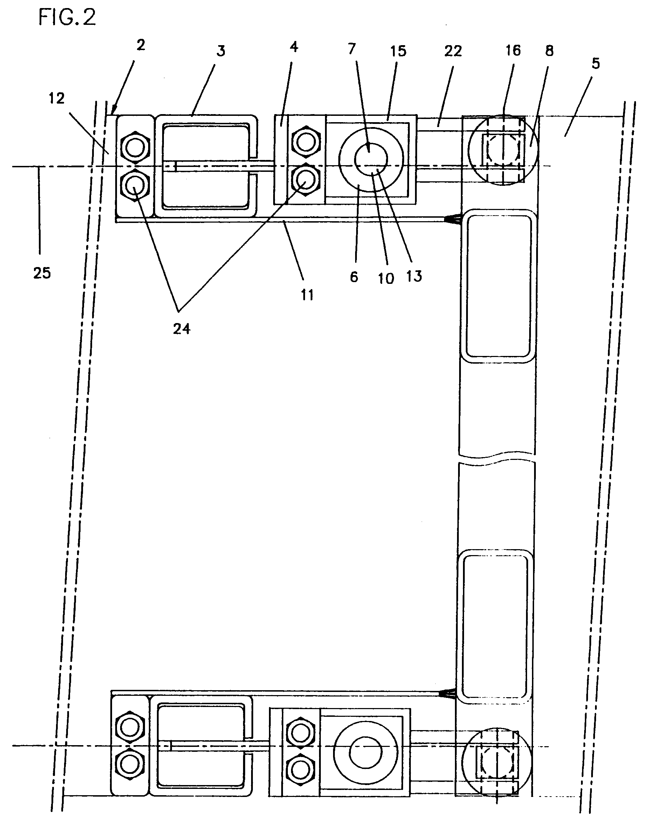

For pivoting the loading platform 5, the closing cylinder 8 is at one end pivotably connected to the loading platform 5 at the point 20, and at the other end to the slider 4 at the point 21. To that end, said slider 4 is provided with a U-shaped portion 15 extending around the hoisting cylinder 7 and carrying the lips 22, as it appears from Fig. 2.

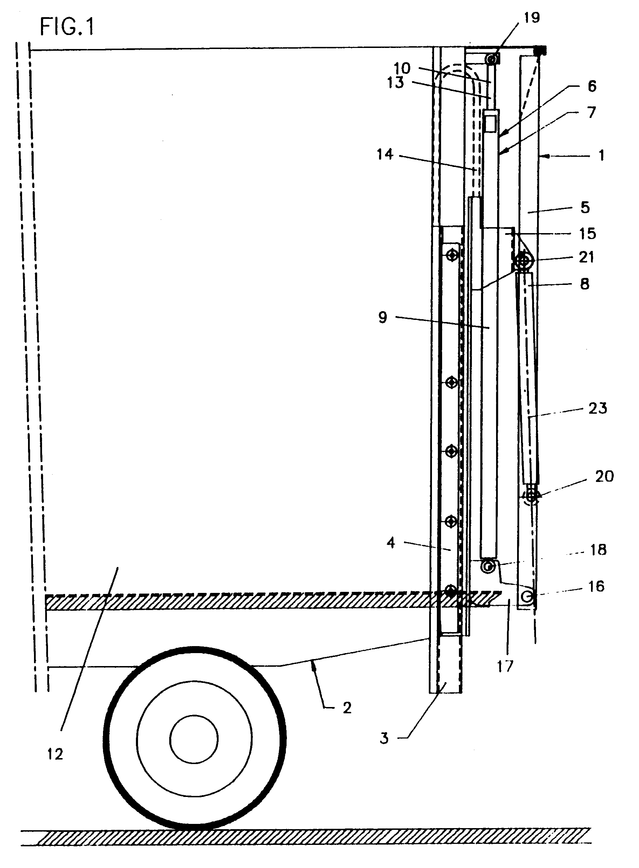

As it appears from Fig. 1, with the loading platform 5 in the vertical position, the axis 23 of the closing cylinder 8 will be in somewhat oblique position. The prolongation of the axis 23 will always be beyond the pivot 16, so that the loading platform 5 will not be blocked when the latter is pivoted downward. Here, it should be pointed out, that the location of the pivots can also be changed, since by the weight of the parts themselves, these will tend to move towards a certain position.

For the supply of pressurized medium to the hoisting cylinders 7, there are flexible channels 14 which can be guided by the guides 13 which can be connected to the piston rods 10 of the pressurized medium cylinders 7. A channel 14 can also be connected to a piston rod 10 which then will be provided with a bore through which pressurized medium can be supplied to the space above the piston. For supply and discharge of pressurized medium to the various channels, one can employ connecting points 24 mounted at fixed locations.

It will be obvious, that the pressurized medium cylinders 7 and the closing cylinders 8 can be connected to the various parts in the reverse position as well.

When the loading platform 5 is in the position as shown in Fig. 1, sealing profiles 11 can be applied for realizing a seal between the loading platform 5 and the container 12 of the vehicle 2.

In Fig. 2, the line 25 is indicated, being part of the plane in which the axes of the column 3, of the hoisting cylinder 7 and of the closing cylinder 8 are situated, said plane being about square to the pivot shaft 16.

## Claims

1. Loading lift device (1) being mountable to the container (12) of a vehicle (2), said loading lift comprising two spaced-apart and parallel columns (3) being connectable to said container (12) in a substantially vertical position one at each side of the container opening, sliders (4) being mounted in or around said columns (3), a loading platform (5) being pivotably connected to said sliders (4) and being pivotably around a shaft (6) running square to the longitudinal direction of said sliders (4), saids loading platform (5) being pivotable over an angle of at least 90° from an operational position in which there can be a load on the loading platform (5) to an almost vertical position and vice versa, said sliders (4) being adjustable in height by means of at least one hoisting cylinder (7) extending substantially parallel to said column (3) and at one end being connected to said column (3) or to a fixed portion of said container (12) and at the other end to said slider (4), **characterized in that** the upper end of said hoisting cylinder (7) is connected to said column (3) or a fixed portion of the container (12) and the lower end to said slider (4) or a portion of the loading platform (5) fixedly connected to said slider (4), a closing cylinder (8) being present for pivoting said loading platform (5), said hoisting and closing cylinders (7,8) for moving said sliders (4) and for pivoting said loading platform (5) respectively being mounted such, that the axes of a column (3) and of its accompanying slider (4), of tee hoisting cylinder (7) and of the closing cylinder (8) are situated in a common plane (25) being almost square to the pivot shaft (16) of the loading platform (5), the pivot (21) between said closing cylinder (8) and said slider (4) being mounted to a connecting element (15) being formed such, that it extends along at least one side of said hoisting cylinder (7).

2. Loading lift device according to claim 1, **characterized in that** each hoisting cylinder (7) is pivotably connected to the related slider (4) and to said column (3) either to said container (12).

3. Loading lift device according to claim 1 or 2, **characterized in that** the part of the slider (4) being present outside said column (3) is tubular, said hoisting cylinder (7) connected to it being positioned, at least partially, inside said tubular part, the pivot (21) of said closing cylinder (8) being fixed to said tubular part.

4. Loading lift device according to claim 3, **characterized in that** said tubular part of the slider (4) is forming part of said hoisting cylinder (7).

5. Loading lift device according to one of the preceding claims, **characterized in that** the tube shaped portion of said hoisting cylinder (7) forms the lower end of it which is connected to said slider (4) either (4) to a portion of the loading platform (5) fixedly connected to said slider (4), said tube shaped portion being provided with the pivot (21) for said closing cylinder (8).

6. Loading lift device according to one of the preceding claims, **characterized in that** said hoisting cylinder (7) and said closing cylinder (8) are single-acting pulling cylinders.

## Patentansprüche

1. Lastaufzugseinrichtung (1), die an dem Behälter (12) eines Fahrzeugs (2) anbringbar ist, wobei die Lastaufzugseinrichtung zwei voneinander beabstandete und parallele Säulen (3) aufweist, die an dem Behälter (12) in einer im wesentlichen vertikalen Position eine an jeder Seite der Behälteröffnung anbringbar sind, Läufer (4), die in oder um die Säulen (3) angeordnet sind, eine Ladeplattform (5), die schwenkbar mit den Läufern (4) verbunden ist und um eine Welle (6) schwenkbar ist, die sich quer zu der Längsrichtung der Läufer (4) erstreckt, wobei die Ladeplattform (5) um einen Winkel von mindestens 90° von einer Betriebsposition, in welcher sich eine Last auf der Ladeplattform (5) befindet, zu einer beinahe vertikalen Position oder umgekehrt schwenkbar ist, wobei die Läufer (4) in der Höhe mit Hilfe zumindest eines Aufzugszylinders (7) verstellbar sind, der sich im wesentlichen parallel zu der Säule (3) erstreckt und an einem Ende mit der Säule (3) oder einem festen Teil des Behälters (12) verbunden ist, und mit dem anderen Ende an dem Läufer (4),
**dadurch gekennzeichnet,**
daß das obere Ende des Aufzugszylinders (7) mit der Säule (3) oder einem festen Teil des Behälters (12) verbunden ist und das untere Ende mit dem Läufer (4) oder einem Teil der Ladeplattform (5), die fest mit dem Läufer (4) verbunden ist, wobei ein Schließzylinder (8) vorhanden ist, um die Ladeplattform (5) zu schwenken, wobei die Aufzugs- und Schließzylinder (7, 8) zum Bewegen der Schlitten (4) und zum Schwenken der Ladeplattform (5) jeweils so angeordnet sind, daß die Achsen einer Säule (3) und ihres zugehörigen Läufers (4), des Aufzugszylinders (7) und des Schließzylinders (8) in einer gemeinsamen Ebene (25) angeordnet sind, die beinahe quer zu der Schwenkachse (16) der Ladeplattform (5) verläuft, wobei das Gelenk (21) zwischen dem Schließzylinder (8) und dem Läufer (4) mit einem Verbindungselement (15) verbunden ist, welches so gebildet ist, daß es sich entlang zumindest einer Seite des Aufzugszylinders (7) erstreckt.

2. Lastaufzugseinrichtung nach Anspruch 1, dadurch gekennzeichnet, daß jeder Aufzugszylinder (7) schwenkbar mit dem zugehörigen Läufer (4) und der Säule (3) und weiter mit dem Behälter (12) verbunden sind.

3. Lastaufzugseinrichtung nach Anspruch 1 oder 2, dadurch gekennzeichnet, daß der Teil des Läufers (4), der sich außerhalb der Säule (3) befindet, röhrenförmig ist, wobei der Aufzugszylinder (7), der damit verbunden ist, zumindest teilweise innerhalb des röhrenförmigen Teils angeordnet ist, wobei das Gelenk (21) des Schließzylinders (8) fest mit dem röhrenförmigen Teil verbunden ist.

4. Lastaufzugseinrichtung nach Anspruch 3, dadurch gekennzeichnet, daß der röhrenförmige Teil des Läufers (4) als Teil des Aufzugszylinders (7) ausgebildet ist.

5. Lastaufzugseinrichtung nach einem der vorhergehenden Ansprüche, dadurch gekennzeichnet, daß der röhrenförmige Abschnitt des Aufzugszylinders (7) das untere Ende davon bildet, welches mit dem Läufer (4) verbunden ist, und weiter (4) mit einem Abschnitt der Ladeplattform (5), die fest mit dem Läufer (4) verbunden ist, wobei der röhrenförmige Abschnitt mit dem Gelenk (21) für den Schließzylinder (8) ausgestattet ist.

6. Lastaufzugseinrichtung nach einem der vorhergehenden Ansprüche, dadurch gekennzeichnet, daß der Aufzugszylinder (7) und der Schließzylinder (8) einfach wirkende Zugzylinder sind.

## Revendications

1. Dispositif élévateur de chargement (1) pouvant être monté sur la carrosserie (12) d'un véhicule (2),ledit dispositif élévateur de chargement comprenant deux montants (3), parallèles et espacés l'un de l'autre, et pouvant être reliés à la carrosserie (12) en une position pratiquement verticale, un montant de chaque côté de l'ouverture de la carrosserie, des coulisseaux (4) étant montés dans et autour desdits montants (3), une plateforme de chargement (5) étant montée pivotante, sur lesdits coulisseaux (4) et s'étendent, pivotant autour d'un arbre (6), perpendiculaire à la direction longitudinale desdits coulisseaux (4), ladite plateforme de chargement (5) pouvant pivoter sur un angle d'au moins 90° depuis une position opérationnelle dans laquelle il peut y avoir une charge sur la plateforme de chargement (5) jusqu'à une position presque verticale et vice versa, lesdits coulisseaux (4) pouvant être réglés en hauteur au moyen d'au moins un vérin de montée (7) s'étendant pratiquement parallèle audit montant (3) et étant relié à une extrémité audit montant (3) ou à une partie fixe de ladite carrosserie (12) et à l'autre extrémité audit coulisseau (4), caractérisé en ce que l'extrémité supérieure dudit vérin de montée (7) est reliée audit montant (3) ou à une partie fixe de la carrosserie (12) et non extrémité inférieure audit coulisseau (4) ou à une partie de la plateforme de chargement (5) solidarisée dudit coulisseau (4), un vérin de fermeture (8) étant présent pour faire pivoter ladite plateforme de chargement (5), lesdits vérins de montée (7) et de fermeture (8) destinés à déplacer lesdits coulisseaux (4) et à faire pivoter ladite plateforme de chargement (5) respectivement étant montés de telle sorte que les axes d'un montant (3) et de son coulisseau associé (4), du vérin de levée (7) et du vérin de fermeture (8) sont situés dans un plan commun (25) presque perpendiculaire à l'arbre de pivotement (16) de la plateforme de chargement (5), le pivot (21) entre ledit vérin de fermeture (8) et ledit coulisseau (4) étant monté sur un élément de raccordement (15) formé de telle sorte qu'il s'étend le long d'au moins un côté dudit vérin de montée (7).

2. Dispositif élévateur de chargement selon la revendicatlon 1, caractérisé en ce que chaque vérin de montée (7) est relié à pivotement au coulisseau correspondant (4) et audit montant (3) ou à ladite carrosserie (12).

3. Dispositif élévateur de chargement selon la revendication 1 ou la revendication 2, caractérisé en ce que la partie du coulisseau (4) se trouvant à l'extérieur dudit montant (3) est tubulaire, ledit vérin de montée (7) qui lui est relié étant positionné, au moins partiellement, à l'intérieur de ladite partie tubulaire, le pivot (21) dudit vérin de fermeture (8) étant fixé sur ladite partie tubulaire.

4. Dispositif élévateur de chargement salon la revendication 3, caractérisé en ce que ladite partie tubulaire du coulisseau (4) fait partie dudit vérin de montée (7).

5. Dispositif élévateur de chargement selon l'une des revendications précédentes, caractérisé en ce que la partie tubulaire dudit vérin de montée (7) forme sa partie inférieure qui est reliée audit coulisseau (4) ou à une partie de la plateforme de çhargement (5) solidarisée dudit coulisseau (4), ladite partie tubulaire étant pourvue du pivot (21) pour ledit vérin de fermeture (8).

6. Dispositif élévateur de chargement selon l'une des revendications précédentes, caractérisé en ce que ledit vérin de montée (7) et ledit vérin de fermeture (8) sont des vérins de traction à simple effet.
